# EUROPEAN PATENT SPECIFICATION

(11) **EP 1 593 725 B1**
(45) Date of publication and mention of the grant of the patent: **21.12.2011**
(21) Application number: 04706801.0
(22) Date of filing: 30.01.2004
(51) Int. Cl.: C09J 133/00, C09J 7/00, B32B 27/00, C09J 133/08, C09J 133/10, C09J 11/06, C08K 5/00, C08K 5/07

(54) **ULTRAVIOLET-CROSSLINKABLE TRANSPARENT HOT MELT PRESSURE -SENSITIVE ADHESIVE, TRANSPARENT PRESSURE-SENSITIVE ADHESIVE SHEET AND LAMINATES**
ULTRAVIOLETTVERNETZBARE TRANSPARENTE SCHMELZHAFTKLEBER, TRANSPARENTE HAFTKLEBEFOLIE SOWIE LAMINATE
ADHESIF A CHAUD TRANSPARENT SENSIBLE A LA PRESSION ET RETICULABLE PAR ULTRAVIOLETS, FEUILLE ADHESIVE TRANSPARENTE SENSIBLE A LA PRESSION ET STRATIFIES

(30) Priority: 30.01.2003 JP 2003022679
(43) Date of publication of application: 09.11.2005
(73) Proprietor: MITSUBISHI PLASTICS, INC., Chiyoda-ku, Tokyo 100-0005 (JP)
(72) Inventor: INENAGA, Makoto Nagahama Pl Mitsubishi PlasticsInc, Nagahama-shi, Shiga 526-8660 (JP)
(74) Representative: Klunker . Schmitt-Nilson . Hirsch
(86) International application number: PCT/JP2004/000888
(87) International publication number: WO 2004/067667

(56) References cited:
- WO-A-96/35725
- DE-A1- 10 020 651
- DE-A1- 19 946 898
- JP-A- 9 040 928
- JP-A- 10 338 857

## Description

### Technical Field

The present invention relates to an ultraviolet-crosslinking transparent hot-melt pressure-sensitive adhesive, a transparent pressure-sensitive adhesive sheet and laminates all of which can be used in applications of: laminated glasses for windows for housing and building materials that are required to have security performance, safety performance and disaster prevention performance, windows for machine tool, windows for vehicles, rolling stock, marine vessels and air planes, wind shields of helmets, goggles, showcases for jewelries or works of art, windows for finance-related buildings and laminated optical lenses; and transparent protection panel laminates for flat panel displays, such as liquid crystal display, PDP (plasma display panel) and EL (organic electroluminescence) display, which are required to have impact resistance, light weight and visibility, and solar cell modules, sensors, gages and meters.

### Background Art

Traditionally, glass plates have been used for laminated glasses or protection panels. However, with the increasing demands in recent years for laminated glasses or protection panels to have security performance, safety performance and disaster protection performance, and moreover, have light weight and improved impact resistance, a laminated glass of different materials, which are produced by stacking glass plates and synthetic resin plates such as acrylic plate or a polycarbonate (PC) plate as a materials taking the place of glass, have been widely used.

However, due to the difference in linear expansion coefficient between glass plates and synthetic resin plates, laminated glasses produced by the conventional autoclave method or the method disclosed in Japanese Patent Laid-Open No. 7-290647, in which liquid adhesive is cast between plates and cured by ultraviolet rays or heat, give rise to problems of warp, peeling, cracking and the like, which remain unsolved.

Further, currently used window films do not have sufficient security performance or safety performance, and therefore, there have been increasing demands for PC laminated glasses to be used for windows of vehicles, ordinary houses or shops of the finance business or expensive articles, or showcases of shops of the expensive articles. The use of PC laminated glasses is, however, problematic in that the larger the laminate glass area becomes, the larger the warp, peeling or cracking becomes and the existing windows ought to be replaced by new ones.

Still further, when using a laminate glass of different material as a protection panel for a display panel, a problem arises of being unable to make the resultant display panel light-weight or thin, because pressure or heat is hard to apply to such a protection panel, and therefore, the protection panel is hard to apply directly to a display.

JP-A-9040928 discloses an ultraviolet-curable self-adhesive composition which is hot-melt applicable to a substrate by compounding an acrylic polymer formed mainly from a specific (meth)acrylic ester with a photopolymerization initiator of a hydrogen abstraction type. The melt viscosity of the acrylic polymer is 55,000 mPas or less, and upon crosslinking the polymer forms a hard adhesive sheet having an extremely high holding power.

DE 100 20 651 A1 discloses several adhesive compositions, namely an adhesive composition mainly comprising copolymers of ethylene, vinyl acetate and acrylate and/or methacrylate monomers, an adhesive composition mainly comprising copolymers of ethylene, vinyl acetate and maleic acid and/or maleic acid anhydride, an adhesive composition mainly comprising copolymers of ethylene and acrylate and/or methacrylate monomers and maleic acid and/or maleic acid anhydride, and a further adhesive composition mainly comprising ethylene-vinyl acetate copolymers. The adhesive compositions may be formed into films, and the films are poor in adhesion at room temperature.

JP-10-338857 A discloses an adhesive composition mainly comprising ethylene-ethyl acrylate copolymers, the adhesive composition having enhanced bonding properties. The adhesive compositions are hot-melt adhesives, and lamination is performed using a heat-compression method.

DE-199 46 898 A1 discloses UV-crosslinkable polymers as adhesives for the bonding of carriers coated with the polymer on substrates. From 0.1 to 30% by weight of the monomers of which said polymer is composed are monomers A, namely hydroxyalkyl(meth)acrylates, methyl(meth)acrylate, (meth)acrylonitrile, and (meth)acrylamide. An adhesive sheet obtained by coating the UV-crosslinkable polymers on a variety of base materials and ultraviolet hardening the polymers, exhibits adhesion mainly in a temperature range lower than room temperature.

The present invention has been made in the light of the above described problems with conventional art.

Accordingly, the object of the present invention is to provide an ultraviolet-crosslinking transparent hot-melt pressure-sensitive adhesive sheet which enables the production of laminates at room temperature, while avoiding the necessity of high-temperature and high-pressure treatment by autoclaving, and provide a laminate produced using the same.

### Disclosure of the Invention

The present invention is an ultraviolet-crosslinking transparent hot-melt pressure-sensitive adhesive sheet as claimed in claim 1, and a laminate as claimed in claim 3. The adhesive is obtained by copolymerizing an acrylate or (meth)acrylate component containing a carboxyl group, and further comprises a radical photoinitiator which is at least a hydrogen abstraction radical photoinitiator in an amount of 0.01 to 1.0% by weight based on the (meth)acrylate copolymer.

The ultraviolet-crosslinking transparent hot-melt pressure sensitive adhesive used in the present invention is further characterized in that the above described (meth)acrylate copolymer has a melt viscosity of 150000 to 500000 (mPa·s) at 130°C.

The ultraviolet-crosslinking transparent hot-melt pressure-sensitive adhesive used in the present invention is characterized in that the above described (meth)acrylate copolymer preferably has a Tg (glass transition temperature) of -20°C or lower.

The present invention is a pressure-sensitive adhesive sheet obtainable by hot-melt forming the above described pressure-sensitive adhesive and irradiating the adhesive with ultraviolet rays to carry out crosslinking. The sheet has a holding power at 40°C represented by a slippage length of 1.0 to 13 mm.

Further, the present invention is further a laminate including: a transparent pressure-sensitive adhesive sheet according to the invention as an intermediate layer; and a transparent glass plate or synthetic resin plate stacked on at least one surface of the above described transparent pressure-sensitive adhesive sheet.

### Best Mode for Carrying Out the Invention

The ultraviolet-crosslinking transparent hot-melt pressure-sensitive adhesive sheet is obtainable from an adhesive wherein the radical photoinitiators for the (meth)acrylate copolymer include at least a hydrogen abstraction radical photoinitiator.

Commonly used ultraviolet-crosslinking pressure-sensitive adhesives have to contain both UV-crosslinkable monomer and photo initiator. However, after directing tremendous research effort toward UV-crosslinking pressure-sensitive adhesives, the present inventor has found that a (meth)acrylate copolymer can be ultraviolet-crosslinked if the radical photoinitiators include at least a hydrogen abstraction radical photoinitiator, even if no UV-crosslinkable monomers is added.

A hydrogen abstraction radical photoinitiator is a photopolymerization initiator that generates a radical by abstracting a hydrogen atom from another molecule. Of typical hydrogen abstraction radical photoinitiators, benzophenone is preferably used in the present invention in terms of transparence and curability. The amount of such a radical photoinitiator included in the pressure-sensitive adhesive used in the present invention can be selected depending on the thickness of an intended pressure-sensitive adhesive sheet or conditions under which the pressure-sensitive adhesive is exposed to UV light. Other examples of typical hydrogen abstraction radical photoinitiators include:
benzil, methyl o-benzoylbenzoate, acrylated benzophenone, thioxanthone, 3-ketocoumarin, 2-ethylanthraquinone, camphorquinone, Michler's ketone tetra(t-butylperoxycarbonyl)benzophenone, the mixtures of two or
more kinds of compounds selected from the above, and the mixtures of a compound selected from the above and a cleavage type of radical photoinitiator.

The amount of the radical photoinitiator included in the pressure-sensitive adhesive used in the present invention is in the range of 0.01 to 1.0 % by weight per 100 % of (meth)acrylate copolymer and, taking into account thick film curability, transparency and stability with time, preferably 0.05 to 0.5 % by weight.

Examples of (meth)acrylates, that is, alkylacrylate or alkylmethacrylate components applicable for forming a (meth)acrylate copolymer include: alkylacrylates or alkylmethacrylates whose alkyl group is any one selected from the group consisting of n-octyl, isooctyl, 2-ethylhexyl, n-butyl, isobutyl, methyl, ethyl and isopopyl, and the mixtures or two or more kinds of compounds selected from the above. As another component, an acrylate or (meth)acrylate containing an organic functional group such as carboxyl, hydroxyl or glycidyl group may also be copolymerized. A component containing a carboxyl group is always copolymerized.

The ultraviolet-crosslinking transparent hot-melt pressure-sensitive adhesive used in the present invention can be obtained using, as starting materials, monomer components, which are appropriately selected from the above described alkyl(meth)acrylate components and from (meth)acrylate components having an organic functional group, in combination, a monomer comprising a carboxyl group being essential.

To obtain a flexible pressure-sensitive adhesive sheet which enables the production of high-quality laminates at room temperature, the (meth)acrylate copolymer before crosslinking has the following characteristics:
(a) The melt viscosity of the (meth)acrylate copolymer at 130°C is 150000 to 500000 (mPa·s).
(b) Tg of the (meth)acrylate copolymer is preferably -20°C or less.

The melt viscosity and Tg of the (meth)acrylate copolymer obtained by polymerization are measured with a viscoelsticity measuring instrument, for example, Dynamic Analyzer RDA-II manufactured by Rheometrics.

For melt viscosity (η*) is read which is measured under the conditions: parallel plate 25 mmφ, imposed distortion 2 %, temperature 130°C, and frequency 0.02 Hz.

For Tg, the temperature showing the maximum Tanδ is read which is measured under the conditions: parallel plate 25 mmφ, imposed distortion 2 %, and 1 Hz of frequency.

The melt viscosity of the (meth)acrylate copolymer is in the range of 150000 to 500000 (mPa·s) and Tg of the same is preferably -20°C or less. The melt viscosity less than 50000 (mPa·s) may be the factor that makes it impossible to obtain thickness accuracy when forming the pressure-sensitive adhesive into a thick film or to provide a crosslinked sheet with a sufficient flexibility, and according to the invention the melt viscosity is 150000 (mPa·s) up to 500000 (mPa·s). The melt viscosity more than 500000 (mPa·s) may make hot-melt processability poor.

Tg higher than -20°C may be the factor that lowers the durability of the resultant laminate at low temperatures.

In the light of flexibility and durability, it is more preferable to adjust the melt viscosity so that it falls in the range of 150000 to 400000 (mPa·s) and Tg so that it falls in the range of -60 to -40°C.

An ultraviolet-crosslinking hot-melt pressure-sensitive adhesive can be obtained by allowing radical photoinitiators for the above described (meth)acrylate copolymer to include a hydrogen abstraction radical photoinitiator.

A transparent pressure-sensitive adhesive sheet can be obtained by forming the above described pressure-sensitive adhesive into a sheet-like shape having a thickness of 0.05 to 2 mm and then exposing the sheet-like pressure-sensitive adhesive to ultraviolet rays to crosslink the copolymer in the pressure-sensitive adhesive sheet. The ultraviolet-crosslinking hot-melt pressure-sensitive adhesive is usually formed into a sheet-like shape in such a manner as to laminate the transparent pressure-sensitive adhesive on a release film. As illustrated in examples later, forming a transparent pressure-sensitive adhesive sheet in such a manner as to sandwich the transparent pressure-sensitive adhesive in a molten state between two release films (at least one release film is a transparent one) is a preferred embodiment of the present invention. A transparent pressure-sensitive adhesive sheet is obtained by exposing the transparent pressure-sensitive adhesive to ultraviolet rays through the transparent film to crosslink the copolymer in the adhesive.

The ultraviolet-crosslinking transparent hot-melt pressure-sensitive adhesive sheet according to claim 4 of the present invention has a preferred holding power (cohesive power) for obtaining adhesive durability. It is obtained by hot-melt forming the above described pressure-sensitive adhesive into a sheet-like shape and then exposing the same to ultraviolet rays to crosslink the copolymer in the same and is characterized by having a holding power at 40°C of 1.0 to 13 mm in terms of the slippage length.

The holding power is determined in the steps of: backlining the pressure-sensitive adhesive sheet, which has been formed to have a thickness of 0. 5 mm and whose copolymer has been ultraviolet-crosslinked, with a 38-µm PET film, allowing the pressure-sensitive adhesive sheet to adhere to a SUS plate with an area of 20 mm x 20 mm specified in JISZ 0237, applying a load of 4.9 N across the plane of the SUS plate at 40°C for 2 hours, and measuring the slippage length of the SUS plate.

When the slippage, as holding power, is less than 1.0 mm, the cohesive power of the pressure-sensitive adhesive sheet is too large to absorb the difference in linear expansion coefficient, and warp, peeling or cracking occurs in laminates of different sheet materials at a heat cycle test. When the slippage is 13 mm or more, the cohesive is so small that the laminated sheet might slip down or the pressure-sensitive adhesive sheet might be expanded, resulting in poor appearance. Preferably the pressure-sensitive adhesive sheet is adjusted so that it has a slippage length in the range of 5 mm to 10 mm, whereby the pressure-sensitive adhesive sheet after stacking can have the most satisfactory durability.

The present invention further provides a laminate including: the above described transparent pressure-sensitive adhesive sheet as an intermediate layer; and a transparent glass plate or a synthetic resin plate stacked on at least one surface of the pressure-sensitive adhesive sheet.

Currently used transparent laminates such as laminated glasses use 2 plates of glass and a thermoplastic resin or liquid adhesive, whereas the laminate of the present invention is produced using a pressure-sensitive adhesive sheet which is flexible and capable of adhering to a glass plate or a synthetic resin plate in the environment at room temperature.

For example, the above described transparent pressure-sensitive adhesive sheet can be used together with at least 2 glass plates, at least one glass plate and at least one synthetic resin plate, or at least 2 synthetic resin plates to make up a transparent laminate. The laminate may be produced by the alternate stacking a glass plate and a synthetic resin plate: glass plate/synthetic resin plate/glass plate; or synthetic resin plate/glass plate/synthetic resin plate. Transparent laminates or laminates whose one surface is made up of a transparent plate have good transparency. For example, if one surface of a laminate is made up of a transparent plate, the other surface of the same may be made up of an opaque metal plate or a designed plate, and moreover, made up of a film or a sheet. When it is not necessary to provide a transparent plate at either surface of a laminate, a laminate such as metal plate/metal plate can be made up using the transparent pressure-sensitive adhesive sheet of the present invention.

There are many methods for producing laminates. However, methods which do not employ autoclaving include, for example, the following ones.

One method is such that it includes the step of: first stacking a transparent pressure-sensitive adhesive sheet of the present invention on one plate-like material, which is to be a constituent of a laminate; then putting another plate-like material on the above described plate-like material via its adhesive surface, evacuating the air between the plate-like materials and stacking the same by pressing.

Another method is such that it includes the steps of: first stacking a transparent pressure-sensitive adhesive sheet of the present invention on one plate-like material, which is to be a constituent of a laminate; then carrying another plate-like material between nip rolls so that it comes in contact with the above described pressure-sensitive adhesive sheet for the first time between the nip rolls and continuously stacking the plate-like materials while pushing air bubbles out by the pressure of the rolls.

Laminates of good quality can be obtained as above.

The present invention has been described in terms of its preferred embodiments; however, it is to be understood that the present invention is not limited to the above described embodiments, and various modifications and additions can be made without departing from the spirit and the scope of the invention as hereinafter claimed.

### [Examples]

In the following, the present invention will be described by several examples; however, it is to be understood that these examples are not intended to limit the present invention.

### (Example 1)

First, 0.1 parts by weight of benzophenone, as a hydrogen abstraction type of photo initiator, was added to 100 parts by weight of acrylic ester copolymer, and the mixture was melt stirred to prepare a transparent pressure-sensitive adhesive. The obtained pressure-sensitive adhesive was sandwiched between two sheets of release PET 75 µm thick and 100 µm thick, respectively, and hot-melt formed into a sheet-like shape 0.5 mm thick. Then, both surfaces of the sheet-like pressure-sensitive adhesive were exposed to light through the sheets of release PET using a high-pressure mercury lamp in an integral quantity of light of 3600 mJ/cm² for each to obtain a transparent pressure-sensitive adhesive sheet. The integral quantity of light was measured using an UV3t sensor of UV-M10 manufactured by OAC Inc. with an X19 filter fixed thereto.

The composition of the acrylic ester copolymer used was: 78.4% by weight of n-butyl acrylate, 19.6% by weight of 2-ethylhexyl acrylate, and 2.0% by weight of acrylic acid, the Tg of the same was -40°C, and the melt viscosity of the same at 130°C was 250000 (mPa·s).

The above described pressure-sensitive adhesive sheet was used, as a sheet for an intermediate layer, to produce a laminate by the method described below. The laminate was produced at room temperature (20°C).

The production method was as follows: a pressure-sensitive adhesive sheet for an intermediate layer with one of its release films having been peeled off was carried between nip rolls and a driving roll so that the pressure-sensitive adhesive sheet came in contact with a polycarbonate (PC) plate (5 mm thick, 300 mm wide, 600 m long), which was commercially available and having been dried at 80°C in advance, for the first time between the two rolls, the pressure-sensitive adhesive sheet was stacked on the PC plate with a linear pressure of 9.8 N/cm and at a rate of 5 m/min, and the remaining release film was peeled off.

Then, the PC plate with the above described pressure-sensitive adhesive sheet laminated thereon and a commercially available float glass plate (3 mm thick, 300 mm wide, 600 m long) were allowed to face each other through the pressure-sensitive adhesive sheet in such a manner as not to come contact with each other, the end portions of the two plates were fed between nip rolls and a driving roll so that the two plates came into contact with each other for the first time between the rolls, and the two plates were held between the nip rolls (with a linear pressure of 294 N/cm and at a rate of 0.5 m/min) to obtain a transparent laminate.

### (Example 2)

First, 0.15 parts by weight of IRGACURE 500 (an initiator produced by blending benzophenone, a hydrogen abstraction type of initiator, and IRGACURE 184, a cleavage type of initiator, with a ratio of 50 : 50) manufactured by Ciba Specialty Chemicals was added, as a photo initiator, to 100 parts by weight of acrylic ester copolymer, the same type as that used in example 1. And the mixture was melt stirred to prepare a transparent pressure-sensitive adhesive. The obtained pressure-sensitive adhesive was sandwiched between two sheets of release PET 75 µm thick and 100 µm thick, respectively, and hot-melt formed into a sheet-like shape 0.5 mm thick. Then, both surfaces of the sheet-like pressure-sensitive adhesive were exposed to light through the sheets of release PET using a high-pressure mercury lamp in an integral quantity of light of 3600 mJ/cm² for each to obtain a transparent pressure-sensitive adhesive sheet. The other conditions were the same as those in example 1.

A transparent laminate was produced using the resultant transparent pressure-sensitive adhesive sheet in the same manner as in example 1.

### (Example 3)

First, 0.1 parts by weight of benzophenone was added to 100 parts by weight of acrylic ester copolymer, which was prepared to have the same composition as that of example 1 and a melt viscosity of 400000 (mPa·s), and the mixture was melt stirred to prepare a transparent pressure-sensitive adhesive. Then, a transparent pressure-sensitive adhesive sheet and a laminate were produced in the same manner as in example 1.

### (Comparative example 1)

First, 1.0 parts by weight of IRGACURE 184, a cleavage type of initiator, manufactured by Ciba Specialty Chemicals was added to 100 parts by weight of acrylic ester copolymer, the same type as used in example 1, and the mixture was melt stirred to prepare a transparent pressure-sensitive adhesive. Then, a transparent pressure-sensitive adhesive sheet and a laminate were produced in the same manner as in example 1.

### (Comparative example 2)

First, 1.2 parts by weight of IRGACURE 500 manufactured by Ciba Specialty Chemicals was added, as a photo initiator, to 100 parts by weight of acrylic ester copolymer, the same type as that used in example 1, and the mixture was melt stirred to prepare a transparent pressure-sensitive adhesive. Then, a transparent pressure-sensitive adhesive sheet and a laminate were produced in the same manner as in example 1.

### (Comparative example 3)

First, 0.008 parts by weight of IRGACURE 500 was added, as a photo initiator, to 100 parts by weight of acrylic ester copolymer, the same type as that used in example 1, and the mixture was melt stirred to prepare a transparent pressure-sensitive adhesive. Then, a transparent pressure-sensitive adhesive sheet and a laminate were produced in the same manner as in example 1.

### (Comparative example 4)

First, 0.8 parts by weight of IRGACURE 500 was added, as a photo initiator, to 100 parts by weight of acrylic ester copolymer, which was prepared to have a composition: 70% by weight of n-butyl acrylate, 5% by weight of 2-ethylhexyl acrylate, and 25% by weight of acrylic acid, a Tg of -10°C, and a melt viscosity at 130°C of 100000 (mPa·s), and the mixture was melt stirred to prepare a transparent pressure-sensitive adhesive. Then, a transparent pressure-sensitive adhesive sheet and a laminate were produced in the same manner as in example 1.

### (Comparative example 5)

First, 1.0 parts by weight of IRGACURE 500 was added to 100 parts by weight of acrylic ester copolymer, which was prepared to have the same composition as that of example 1 and a melt viscosity of 400000 (mPa·s), and the mixture was melt stirred to prepare a transparent pressure-sensitive adhesive. Then, a transparent pressure-sensitive adhesive sheet and a laminate were produced in the same manner as in example 1.

### (Test and evaluation)

Holding power at 40°C was measured for each produced pressure-sensitive adhesive sheet by the above described measuring method. And for each transparent laminate, the thermal shock test was carried out at -20 to 80°C thermal cycle (4 cycles/day) for 2 weeks, and the appearance after the test was observed. The results are shown in Table 1. In the evaluation by the appearance observed, the laminates which meet all the requirements; expansion-free, peeling-free and plate slippage-free were allowed to grade A.

**[Table 1]**

| | Acrylic ester copolymer | | Holding power | Appearance observation |
|---|---|---|---|---|
| | Melt viscosity (mPaxs) | Tg (·) | | |
| Example 1 | 250000 | -40 | 10mm | A |
| Example 2 | 250000 | -40 | 5mm | A |
| Example 3 | 400000 | -40 | 5mm | A |
| Comparative example 1 | 250000 | -40 | Plate dropped down after 30 seconds | Expansion and plate slippage were observed |
| Comparative example 2 | 250000 | -40 | 0.8mm | Peeling was observed |
| Comparative example 3 | 250000 | -40 | 15mm | Plate slippage was observed |
| Comparative example 4 | 100000 | -10 | 5mm | Peeling was observed |
| Comparative example 5 | 40000 | -40 | 5mm | Peeling was observed |

As is apparent from the results shown in Table 1, the use of the transparent pressure-sensitive adhesive sheets of examples 1 to 3 enabled the stacking process to be carried out at room temperature and laminates having good appearance an excellent durability to be produced. In contrast, the use of the transparent pressure-sensitive adhesive sheets of comparative examples 1 to 3, which employed the pressure-sensitive adhesives that did not satisfy the requirements according to claim 1, resulted in production of laminates having neither satisfactory holding power nor good appearance. The use of the transparent pressure-sensitive adhesive sheets of comparative examples 4 and 5, which employed the pressure-sensitive adhesives that also did not satisfy the requirements according to claim 1, resulted in production of laminates having satisfactory holding power, but poor appearance due to their peeling.

### Industrial Applicability

According to the present invention, an ultraviolet-crosslinking transparent hot-melt pressure-sensitive adhesive sheet of high quality is provided which enables plates of synthetic resin or glass to be conveniently laminated at room temperature, while avoiding the necessity of high-temperature and high-pressure treatment by autoclaving, and is less likely to cause plate slippage in the resultant laminates According to the present invention, laminates are also provided which are produced using the above described pressure-sensitive adhesive sheet.

## Claims

1. An ultraviolet-crosslinking transparent hot-melt pressure-sensitive adhesive sheet, obtainable by hot-melt forming an ultraviolet-crosslinking transparent hot-melt pressure-sensitive adhesive and irradiating the adhesive with ultraviolet rays to carry out crosslinking, the adhesive comprising a (meth)acrylate copolymer which has a melt viscosity at 130 °C of 150,000 to 500,000 (mPa·s) and which is obtainable by copolymerizing an acrylate or (meth)acrylate component containing a carboxyl group, the adhesive further comprising a radical photoinitiatior which is at least a hydrogen abstraction radical photoinitiator in an amount of 0.01 to 1.0 % by weight based on the (meth)acrylate copolymer, **characterized in that** the sheet has a holding power at 40°C represented by a slippage length of 1.0 to 13 mm and a thickness of 0.05 to 2 mm, wherein the melt viscosity is measured with a viscoelasticity measuring instrument under the conditions of parallel plate 25 mm **Ø,** imposed distortion 2 %, temperature 130 °C, and frequency 0.02 Hz, and wherein the holding power is determined in the steps of backlining the pressure-sensitive adhesive sheet, whose copolymer has been ultraviolet-crosslinked, with a 38 µm PET film, allowing the pressure-sensitive adhesive sheet to adhere to a SUS plate with an area of 20 mm x 20 mm specified in JIS Z 0237, applying a load of 4.9 N across the plane of the SUS plate at 40 °C for 2 hours, and measuring the slippage length of the SUS plate.

2. The ultraviolet-crosslinking transparent hot-melt pressure-sensitive adhesive sheet according to claim 1, **characterized in that** the (meth)acrylate copolymer has a Tg of -20 °C or lower, wherein Tg is the temperature showing the maximum tanδ as measured with a viscoelasticity measuring instrument under the conditions of parallel plate 25 mm Ø, imposed distortion 2 % and frequency 1 Hz.

3. A laminate, comprising: the transparent pressure-sensitive adhesive sheet according to claim 1 or 2 as an intermediate layer; and a transparent glass plate or transparent synthetic resin plate stacked on at least one surface of the transparent pressure-sensitive adhesive sheet.

## Patentansprüche

1. Ultraviolettvernetzendes transparentes druckreaktives Schmelzklebstoff-Flachmaterial, das erhältlich ist durch Schmelzformen eines ultraviolettvernetzenden transparenten druckreaktiven Schmelzklebstoffs und Bestrahlen des Klebstoffs mit Ultraviolettstrahlen zur Durchführung einer Vernetzung, wobei der Klebstoff ein (Meth)acrylat-Copolymer aufweist, das bei 130°C eine Schmelzviskosität von 150.000 bis 500.000 (mPa·s) hat, und das erhältlich ist durch Copolymerisieren einer eine Carboxylgruppe enthaltenden Acrylat- oder (Meth)acrylat-Komponente, wobei der Klebstoff außerdem einen radikalischen Photoinitiator, der mindestens ein radikalischer Wasserstoffentziehungs-Photoinitiator ist, in einer Menge von 0,01 bis 1,0 Gew.% auf der Basis des (Meth)acrylat-Copolymers aufweist, **dadurch gekennzeichnet, dass** das Flachmaterial eine Haltekraft bei 40°C, die repräsentiert wird durch eine Gleitlänge von 1,0 bis 13 mm, und eine Dicke von 0,05 bis 2 mm hat, wobei die Schmelzviskosität mit einem Viskoelastizitäts-Messinstrument gemessen wird unter den Bedingungen paralleler Platten mit 25 mm Durchmesser, einer ausgeübten Verformung von 2%, einer Temperatur von 130°C und einer Frequenz von 0,02 Hz, und wobei die Haltekraft bestimmt wird in den Schritten des rückseitig Kaschierens des druckreaktiven Klebstoff-Flachmaterials, dessen Copolymer ultraviolettvernetzt wurde, mit einem 38 µm PET-Film, des Verklebenlassens des druckreaktiven Klebstoff-Flachmaterials mit einer SUS-Platte mit einer Fläche von 20 mm x 20 mm, spezifiziert in JIS Z 0237, des Ausübens einer Belastung von 4,9 N über die Ebene der SUS-Platte bei 40°C für 2 Stunden, und des Messens der Gleitlänge der SUS-Platte.

2. Ultraviolettvernetzendes transparentes druckreaktives Schmelzklebstoff-Flachmaterial nach Anspruch 1, **dadurch gekennzeichnet, dass** das (Meth)acrylat-Copolymer eine Tg von -20°C oder niedriger hat, wobei Tg die Temperatur ist, die den maximalen tanδ, wie gemessen mit einem Viskoelastizitäts-Messinstrument unter den Bedingungen von parallelen Platten mit 25 mm Durchmesser, einer ausgeübten Verformung von 2% und einer Frequenz von 1 Hz, zeigt.

3. Laminat aufweisend: das transparente druckreaktive Klebstoff-Flachmaterial nach Anspruch 1 oder 2 als eine Zwischenschicht; und eine transparente Glasplatte oder eine transparente Platte aus synthetischem Harz, aufgesetzt auf mindestens eine Oberfläche des transparenten druckreaktiven Klebstoff-Flachmaterials.

## Revendications

1. Feuille autoadhésive, thermofusible, transparente, réticulable par ultraviolets pouvant être obtenue par formation à l'état fondu d'un adhésif autoadhésif thermofusible, transparent, réticulable par ultraviolets et irradiation de l'adhésif avec des rayons ultraviolets afin de réaliser la réticulation, l'adhésif comprenant un copolymère de (méth)acrylate qui possède une viscosité à l'état fondu à 130 °C de 150 000 à 500 000 (mPa.s) et qui peut être obtenu par copolymérisation d'un composant acrylate ou (méth)acrylate contenant un groupe carboxyle, l'adhésif comprenant en outre un photoinitiateur radicalaire qui est au moins un photoinitiateur radicalaire d'abstraction de l'hydrogène en une quantité de 0,01 à 1,0 % en poids sur la base du copolymère de (méth)acrylate, **caractérisée en ce que** la feuille possède une force d'adhérence à 40 °C représentée par une longueur de glissement de 1,0 à 13 mm et une épaisseur de 0,05 à 2 mm, dans laquelle la viscosité à l'état fondu est mesurée avec un instrument mesurant la viscoélasticité dans les conditions de plaque parallèle de 25 mm de diamètre, distorsion imposée de 2 %, température de 130 °C et fréquence de 0,02 Hz, et dans laquelle la force d'adhérence est déterminée dans les étapes de doublage de la feuille autoadhésive dont le polymère a été réticulé par ultraviolets, avec un film de PET de 38 µm, permettant à la feuille autoadhésive d'adhérer à une plaque de SUS sur une zone de 20 mm x 20 mm spécifiée dans la méthode JIS Z 0237, en appliquant une charge de 4,9 N sur le plan de la plaque de SUS à 40 °C pendant 2 heures, et en mesurant la longueur de glissement de la plaque de SUS.

2. Feuille autoadhésive, thermofusible, transparente, réticulable par ultraviolets selon la revendication 1, **caractérisée en ce que** le copolymère de (méth)acrylate possède une Tg inférieure ou égale à -20 °C, Tg étant la température montrant la tanδ maximale comme mesurée avec un instrument mesurant la viscoélasticité dans les conditions de plaque parallèle de 25 mm de diamètre, distorsion imposée de 2 %, et fréquence de 1 Hz.

3. Stratifié comprenant la feuille autoadhésive transparente selon la revendication 1 ou 2 en tant que couche intermédiaire ; et une plaque de verre transparente ou une plaque de résine synthétique transparente empilée sur au moins une surface de la feuille autoadhésive transparente.
